(19) Europäisches Patentamt / European Patent Office / Office européen des brevets

(11) **EP 3 369 769 A1**

(12) **EUROPEAN PATENT APPLICATION**
published in accordance with Art. 153(4) EPC

(43) Date of publication:
**05.09.2018 Bulletin 2018/36**

(21) Application number: **16859979.3**

(22) Date of filing: **28.10.2016**

(51) Int Cl.:
*C08J 7/00* (2006.01)    *B32B 27/00* (2006.01)
*B32B 27/16* (2006.01)    *B32B 27/32* (2006.01)
*B65D 65/38* (2006.01)

(86) International application number:
**PCT/JP2016/082123**

(87) International publication number:
**WO 2017/073751 (04.05.2017 Gazette 2017/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.10.2015 JP 2015213086**
**29.10.2015 JP 2015213095**

(71) Applicants:
• **Dai Nippon Printing Co., Ltd.**
**Tokyo 162-8001 (JP)**
• **PT DNP Indonesia**
**Jakarta 13930 (ID)**

(72) Inventors:
• **YUNO Masato**
**Tokyo 162-8001 (JP)**
• **UEKI Takayuki**
**Jakarta 13930 (ID)**
• **MIKAMI Koichi**
**Tokyo 162-8001 (JP)**

(74) Representative: **Müller-Boré & Partner**
**Patentanwälte PartG mbB**
**Friedenheimer Brücke 21**
**80639 München (DE)**

(54) **POLYETHYLENE FILM, LAMINATE, AND PACKAGE USING SAME**

(57) There is provided a polyethylene film and a laminate which can be used to produce a package having high heat resistance, strength and recycling suitability, as an alternative to laminated films conventionally used for a package. The polyethylene film according to the present invention is irradiated with an electron beam on its only one side, wherein crosslink densities in the polyethylene are different between the side irradiated with an electron beam and the other side not irradiated with an electron beam.

FIG. 1

EP 3 369 769 A1

**Description**

TECHNICAL FIELD

The present invention relates to a polyethylene film, and more particularly, to a single-layer polyethylene film having different physical properties on its front and back sides, and a package using the polyethylene film. The present invention also relates to a laminate, and more particularly, to a laminate comprising a polyethylene film substrate that is irradiated with an electron beam on its both sides and a polyethylene film layer that is not irradiated with an electron beam on its at least one side, and a package using the laminate.

BACKGROUND ART

Polyethylene resin films are used for various packaging materials because they have appropriate flexibility and, for example, excellent transparency, moisture resistance and chemical resistance, but also are inexpensive. In particular, since the melting point of polyethylene, which may vary in some degree depending on the type, typically ranges from about 100 to 140°C, it is generally used as a sealant film in the field of packaging materials.

On the other hand, polyethylene resins are inferior in heat resistance and also insufficient in strength as compared with other thermoplastic resins. Therefore, when used as packaging materials, polyethylene resins are used as a laminated film in which a resin film excellent in heat resistance and strength, such as a polyester or nylon film, and a polyethylene film are laminated. A package is manufactured by heat-sealing the edges of the laminated film so that the polyethylene film side is inside of the package (see, for example, Japanese Laid-open Patent Application (Kokai) No. 2005-104525) .

In recent years, it has been attempted to recycle packaging materials for use in response to growing demand for construction of a recycling-oriented society. However, there has been a problem that laminated films obtained by laminating different types of resin films as described above are not suitable for the recycling because of the difficulty in being separated for each resin type.

PRIOR ART REFERENCES

PATENT DOCUMENT

Patent Document 1: Japanese Laid-open Patent Application (Kokai) No. 2005-104525

SUMMARY OF THE INVENTION

PROBLEMS TO BE SOLVED BY THE INVENTION

The present inventors have now found that irradiation of an electron beam to a polyethylene film can cause curing or crosslinking of polyethylene near the film surface irradiated with the electron beam. In addition, it has found that use of a polyethylene film irradiated with an electron beam, using only a polyethylene film instead of a laminate obtained by laminating different resin films conventionally used for a package, can provide a package suitable for recycling as well as having high heat resistance and strength. The present invention is based on this finding.

Thus, an object of the present invention is to provide a polyethylene film which can be used alone as a single-layer polyethylene film to produce a package, and a laminate comprising a polyethylene film substrate, as alternatives to conventional laminated films used for a package. Another object of the present invention is to provide a package using such a polyethylene film and a laminate.

MEANS FOR SOLVING THE PROBLEMS

In one embodiment, the polyethylene film of the present invention is irradiated with an electron beam on its only one side, wherein crosslink densities in the polyethylene are different between the side irradiated with the electron beam and the other side not irradiated with the electron beam.

In the above embodiment, the dose of the electron beam is preferably in the range of 20-1,000 kGy.

In the above embodiment, the acceleration voltage of the electron beam is preferably in the range of 30-300 kV.

In one embodiment, the polyethylene-laminated film of the present invention comprises the first polyethylene film irradiated with an electron beam as described above, and a second polyethylene film not irradiated with an electron beam on its both sides laminated on the side not irradiated with an electron beam of the first polyethylene film.

In the above aspect, a barrier film can be provided between the polyethylene film irradiated with an electron beam on its only one side and the polyethylene film irradiated with an electron beam on its both sides.

In one embodiment, the package of the present invention comprises the polyethylene film irradiated with an electron beam as described above, wherein the side not irradiated with an electron beam of the polyethylene film is heat-sealed.

In one embodiment, the package of the present invention comprises the polyethylene-laminated film as described above, wherein the polyethylene film side not irradiated with an electron beam on its both sides of the polyethylene-laminated film are heat-sealed.

In one embodiment, the laminate of the present invention comprises a polyethylene film substrate irradiated with an electron beam on its both sides and a polyethylene film layer not irradiated with an electron beam on its at least one side.

In the above aspect, the dose of the electron beam is preferably in the range of 20-1,000 kGy.

In the above aspect, the acceleration voltage of the electron beam is preferably in the range of 30-300 kV.

In the above aspect, a barrier film is preferably provided between the polyethylene film substrate and the polyethylene film layer.

In one embodiment, the package of the present invention comprises the laminate as described above, wherein the side of the polyethylene film of the laminate is heat-sealed.

EFFECT OF THE INVENTION

According to the present invention, irradiation of an electron beam to one side of a polyethylene film can cause curing or crosslinking of polyethylene near the film surface irradiated with the electron beam. As a result, this can provide a single-layer polyethylene film in which the crosslink densities of polyethylene on the front and back sides are different. Since the surface of the polyethylene film irradiated with an electron beam and thereby having a higher crosslink density than that of usual polyethylene has high heat resistance and strength, the surface can satisfy the physical properties required as the outer layer of package. On the other hand, since the other surface on which an electron beam is not irradiated has the same physical properties as those of conventional polyethylene films, the surface can maintain the sealant property and flexibility required as the inner layer of package. Therefore, by using such a polyethylene film, a package can be manufactured using only a single-layer polyethylene film instead of a laminated film used for a package. In addition, according to the present invention, irradiation of an electron beam to a polyethylene film substrate constituting a laminate can cause curing or crosslinking of polyethylene in the film substrate irradiated with the electron beam. Since the surface of the polyethylene film substrate irradiated with the electron beam and thereby having a higher crosslink density than that of usual polyethylene has improved heat resistance and strength, the surface can satisfy the physical properties required as the outer layer of package. Further, since the laminate according to the present invention comprises a polyethylene film layer not irradiated with an electron beam on at least its one side, or maintaining heat sealability and flexibility, it can be used to produce a package.

BRIEF DESCRIPTION OF THE DRAWINGS

FIG. 1 is a schematic cross-sectional view of a polyethylene film according to one embodiment of the present invention.
FIG. 2 is a schematic cross-sectional view of a laminated film according to one embodiment of the present invention.
FIG. 3 is a schematic cross-sectional view of a laminated film according to one embodiment of the present invention.
FIG. 4 is a schematic cross-sectional view of a laminate according to one embodiment of the present invention.
FIG. 5 is a schematic cross-sectional view of a laminate according to one embodiment of the present invention.
FIG. 6 is a schematic cross-sectional view of a laminate according to one embodiment of the present invention.

MODE FOR CARRYING OUT THE INVENTION

Polyethylene Film

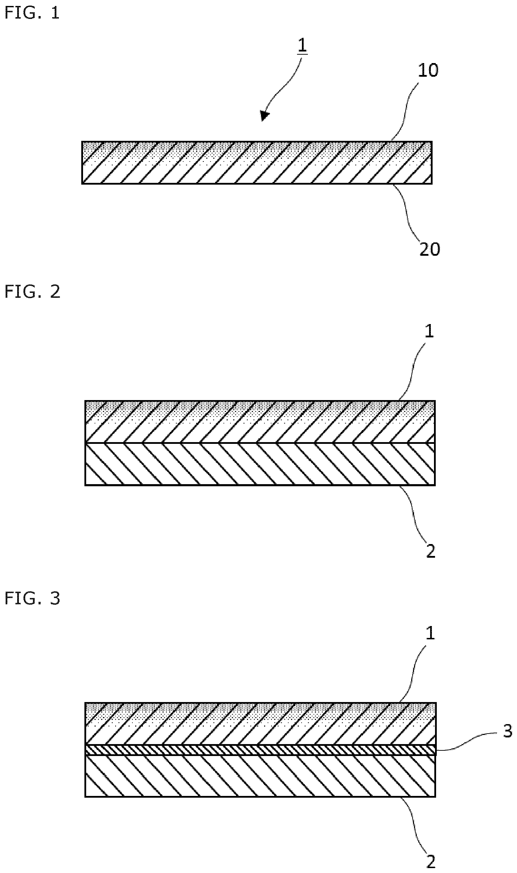

The polyethylene film according to the present invention will be described with reference to the drawings. FIG. 1 is a schematic cross-sectional view of a polyethylene film according to the present invention. The polyethylene film 1 is irradiated with an electron beam on its only one side 10, and the crosslink densities in the polyethylene are different between the side 10 irradiated with an electron beam and the other side 20 not irradiated with an electron beam.

The reason why the crosslink density in polyethylene varies depending on the presence or absence of an electron beam irradiation is not clear but is considered as follows. When polyethylene is irradiated with an electron beam, carbon-hydrogen bonds in the polyethylene near the irradiated film surface are cleaved, generating radicals at the ends of the cleaved bonds. The generated radicals are thought to contact with other polyethylene molecular chain due to molecular motion of the molecular chain and extract hydrogen atoms to be bound to carbon atoms in the polyethylene molecular chain, thereby forming a crosslinked structure.

In general, polyethylene films tend to contract when heated, and as the crosslink density increases, the dimensional stability tends to be improved. Therefore, polyethylene films having different crosslink densities on the front and back sides are curled like a bimetal when heated. Therefore, as a simple method for confirming that crosslink densities are different between the front and back sides of a polyethylene film, it can be confirmed by heating the obtained polyethylene film.

The crosslink density can also be determined by a method utilizing the fact that the crosslinking moiety does not dissolve in solvents, comprising immersing a polyethylene film in an organic solvent such as methyl ethyl ketone, drying the insoluble film remaining without being dissolved, measuring the mass and calculating the rate of change (gel fraction) from the mass of the polyethylene film before dissolution. Specifically, X g of a polyethylene film is first wrapped with Y g of a stainless steel wire mesh, heated and immersed in a solvent to obtain a polyethylene film wrapped with the stainless steel wire mesh. Next, after vacuum-drying, the mass (Z g) of the polyethylene film wrapped with the stainless steel wire mesh after drying is measured. Then, the gel fraction can be determined from the following formula (1):

$$\text{Gel fraction (\% by mass)} = (Z - Y) / X \times 100 \quad (1)$$

Examples of polyethylenes that can be used in the present invention include those obtained by mixing one or two or more types of polyethylenes having different densities and branchings, such as high-density polyethylenes (HDPEs), medium-density polyethylenes (MDPEs), low-density polyethylenes (LDPEs), and linear low-density polyethylenes (LLDPEs).

In general, high-density polyethylenes refer to polyethylenes having a density of 0.940 g/cm$^3$ or more, medium-density polyethylenes refer to polyethylenes having a density of 0.925 to 0.940 g/cm$^3$, and low-density polyethylenes refer to polyethylenes having a density of less than 0.925 g/cm$^3$.

Polyethylenes having different densities and branchings as described above can be obtained by appropriately selecting a polymerization method. For example, the polymerization method is preferably carried out in one step or in multiple steps of two or more steps, by either method of gas phase polymerization, slurry polymerization, solution polymerization, and high-pressure ion polymerization, using a multi-site catalyst such as a Ziegler-Natta catalyst or a single-site catalyst such as a metallocene catalyst as a polymerization catalyst.

The above-mentioned single-site catalyst refers to a catalyst capable of forming a uniform active species and is usually adjusted by contacting a metallocene or non-metallocene transition-metal compound with a promoter for activation. Since single-site catalysts have a uniform active site structure as compared with that of multi-site catalysts, polymers having a structure with high molecular weight and high homogeneity can be preferably polymerized. Single-site catalysts which are preferably used are, in particular, metallocene catalysts. The metallocene catalysts are catalysts containing each of catalyst components comprising: a transition-metal compound of Group IV of the periodic table containing a ligand having a cyclopentadienyl skeleton; a promoter; an organometallic compound, if necessary; and a carrier.

In the above-mentioned transition-metal compound of Group IV of the periodic table containing a ligand having a cyclopentadienyl skeleton, the cyclopentadienyl skeleton is, for example, a cyclopentadienyl group or a substituted cyclopentadienyl group. Examples of the substituted cyclopentadienyl group include those having at least one substituent selected from $C_1$-$C_{30}$ hydrocarbon, silyl, silyl-substituted alkyl, silyl-substituted aryl, cyano, cyanoalkyl, cyanoaryl, halogen, haloalkyl, and halosilyl. The substituted cyclopentadienyl group may have two or more substituents, and the substituents may join together to form a ring, such as an indenyl ring, a fluorenyl ring, an azulenyl ring, or a hydrogenated product thereof. Rings formed by substituents joined together may each have further substituents.

For the transition-metal compound of Group IV of the periodic table containing a ligand having a cyclopentadienyl skeleton, examples of the transition metal include zirconium, titanium and hafnium, and among them, zirconium and hafnium are preferred. It is preferred that the transition-metal compound usually has two ligands having a cyclopentadienyl skeleton and the ligands having cyclopentadienyl skeleton are bound to each other via a crosslinking group. Examples of the crosslinking group include $C_1$-$C_4$ alkylene; silylene; substituted silylene such as dialkylsilylene and diarylsilylene; and substituted germylene such as dialkylgermylene and diaryl germylene. Among them, substituted silylene is preferred. For the above-mentioned transition-metal compound of Group IV of the periodic table containing a ligand having a cyclopentadienyl skeleton, the catalyst component may be a single or a mixture of two or more of them.

The promoter refers to those which can make the transition-metal compound of Group IV of the periodic table effective as a polymerization catalyst or can balance ionic charges in a catalytically activated state. Examples of the promoter include benzene-soluble aluminoxane of organoaluminum oxy-compound or benzene-insoluble organoaluminum oxy-compound; ion-exchangeable layered silicate; boron compounds; ionic compounds composed of a cation containing or not containing an active hydrogen group and a noncoordinating anion; lanthanoid salts such as lanthanum oxide; tin oxide; and phenoxy compounds containing a fluoro group.

The transition-metal compound of Group IV of the periodic table containing a ligand having a cyclopentadienyl skeleton may be used in a state of being supported on a carrier which is an inorganic or organic compound. As the carrier, porous oxides of inorganic or organic compounds are preferable, and specific examples thereof include an ion-exchangeable layered silicate such as montmorillonite, $SiO_2$, $Al_2O_3$, MgO, $ZrO_2$, $TiO_2$, $B_2O_3$, CaO, ZnO, BaO, $ThO_2$ or a mixture thereof. Examples of the organometallic compound used as necessary include organoaluminum compound, organomagnesium compound, and organozinc compound. Among them, organoaluminum is preferably used.

Copolymers of ethylene and other monomers can also be used. Examples of the ethylene copolymer include copolymers comprising ethylene and a $C_3$-$C_{20}$ $\alpha$-olefin. Examples of the $C_3$-$C_{20}$ $\alpha$-olefin include propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene. A copolymer with vinyl acetate or acrylate ester may be used as long as it does not impair the object of the present invention.

In the present invention, polyethylenes obtained by using as a raw material a biomass-derived ethylene in place of a fossil fuel-derived ethylene may be used. Since such biomass-derived polyethylenes are carbon-neutral materials, more environmentally-friendly packages can be obtained. Such a biomass-derived polyethylene can be produced by the method described in, for example, Japanese Laid-open Patent Application (Kokai) No. 2013-177531. Commercially available biomass-derived polyethylene resins (e.g., Green PE commercially available from Braskem) may be used.

The polyethylene film can be obtained by melting the above-mentioned polyethylene resin and allowing it to form a film by a melt extrusion molding method such as inflation molding or T-die molding. The polyethylene film can be molded, for example, by feeding the resin composition to a melt extruder heated to a temperature equal to or higher than the melting point (Tm) of the polyethylene to a temperature of Tm + 70°C to melt it and extruding it in a sheet shape from a die such as a T-die, and then rapidly solidifying the extruded sheet-like object in a rotating cooling drum or the like. As the melt extruder, for example, a single-screw extruder, a twin-screw extruder, a vent type extruder, or a tandem type extruder can be used depending on the purpose.

The thickness of the polyethylene film may vary depending on its use, and is usually about 5 $\mu$m to 500 $\mu$m, preferably about 5 $\mu$m to 200 $\mu$m. The film thickness can be appropriately adjusted depending on, for example, the screw rotation speed of the melt extruder and the rotation speed of the cooling roll.

In film formation, various plastic compounding agents, additives and the like can be added to the polyethylene film for the purpose of improving or modifying, for example, processability, heat resistance, weather resistance, mechanical properties, dimensional stability, antioxidant properties, slip properties, mold releasability, fire retardant properties, antifungal properties, electrical properties and strength of the film, and the amount to be added can vary depending on the purpose, from very small amount to several tens of percent. Typical additives include crosslinking agents, antioxidants, ultraviolet absorbers, light stabilizers, fillers, reinforcing agents, antistatic agents, pigments and modifier resins.

The polyethylene film according to the present invention is characterized in that an electron beam is irradiated on its one side. It is preferable to appropriately select the irradiation energy of the electron beam depending on the use of the intended package. Usually, the higher the irradiation energy of the electron beam is, the larger the amount of radical generated, and the easier the formation of a crosslinked structure. However, when the irradiation energy is too high, too many molecular chains in the polyethylene are cleaved so that physical properties of film, such as strength, tend to be deteriorated.

The dose of the electron beam is preferably in the range of 10 to 2,000 kGy, more preferably 20 to 1,000 kGy. The acceleration voltage of the electron beam is preferably in the range of 20 to 750 kV, more preferably 25 to 400 kV, still more preferably 30 to 300 kV.

The electron beam irradiation device used can be any conventionally known ones, and preferred examples of the device used include a curtain type electron beam irradiation device (LB1023, produced by Eye Electron Beam Co., Ltd.) and a line-irradiation type low-energy electron beam irradiation device (EB-ENGINE, produced by Hamamatsu Photonics Co., Ltd.). Among them, a curtain type electron beam irradiation device (LB1023, produced by Eye Electron Beam Co., Ltd.) can be suitably used.

The oxygen concentration in the electron beam irradiation device is preferably 500 ppm or less, more preferably 100 ppm or less. By performing electron beam irradiation under such conditions, generation of ozone can be suppressed, and deactivation of radicals generated by electron beam irradiation by oxygen in the atmosphere can be suppressed. Such conditions can be achieved, for example, by setting the inside of the device to an inert gas (e.g., nitrogen or argon) atmosphere.

Since the polyethylene film tends to cause thermal shrinkage, the electron beam irradiation is preferably carried out simultaneously with cooling using a cooling drum or the like.

Polyethylene-laminated Film

As shown in FIG. 2, the polyethylene-laminated film according to the present invention have a laminated structure comprising the above-mentioned polyethylene film 1 and a polyethylene film 2 not irradiated with an electron beam on its both side laminated on the side of surface 20 not irradiated with an electron beam of the polyethylene film 1.

For the above-mentioned polyethylene film 1 irradiated with an electron beam, since the electron beam passes through the film, it may cause crosslinking between polyethylene molecular chains even on the side not irradiated with an electron beam, so that the heat sealability on the side not irradiated with an electron beam may be inferior to that of a normal polyethylene film.

By forming into the laminated film as described above, a laminated film having different physical properties (e.g., strength and heat resistance) on the front and back sides can be obtained while using the same material (polyethylene). As the polyethylene film not irradiated with an electron beam on its both sides, those same as the above can be used. Therefore, even when the laminated film is used, since the same polyethylene is used, recycling can be easily performed.

The above-mentioned laminated film can also be produced by laminating the two polyethylene films 1 and 2 by a dry lamination method using an adhesive or the like. In this case, irradiation of an electron beam may be carried out before or after the lamination.

In order to omit the steps of adhesive application and lamination, the polyethylene-laminated film can be produced by coextruding the polyethylene films 1 and 2 from an inflation film molding machine or the like to prepare a laminated film, and then irradiating the laminated film with an electron beam on one side.

In addition, the laminated film can be produced simultaneously with film-formation of the polyethylene film 2 by carrying out extrusion coating of a melted polyethylene resin on the polyethylene film 1 which has been irradiated with an electron beam on its one side. In this case, the electron beam may be irradiated after the film-formation of the polyethylene film 2.

As shown in FIG. 3, the polyethylene-laminated film according to the present invention may also comprise a barrier film 3 between the polyethylene films 1 and 2.

The barrier film can be formed by vapor-depositing a metallic foil such as aluminum foil, a metal such as aluminum, or an inorganic oxide such as aluminum oxide or silicon oxide on the surface of the polyethylene film 2.

As the vapor-depositing method, any known conventional methods can be used, including Physical Vapor Depositions (PVDs) such as vacuum vapor deposition, sputtering, and ion plating, as well as Chemical Vapor Depositions (CVDs) such as plasma-enhanced chemical vapor deposition, thermal chemical vapor deposition, and photochemical vapor deposition.

When producing a film comprising a transparent laminate used for a packaging material, a vacuum vapor deposition method is mainly used and a plasma-enhanced chemical vapor deposition method is also used in some cases.

Further, a composite film comprising two or more vapor-deposited film layers of different kinds of inorganic oxides formed by using physical and chemical vapor deposition methods in combination, for example, can be used.

The degree of vacuum in the vapor deposition chamber is preferably about $10^{-2}$ to $10^{-8}$ mbar, particularly about $10^{-3}$ to $10^{-7}$ mbar before introduction of oxygen, and preferably about $10^{-1}$ to $10^{-6}$ mbar, particularly about $10^{-2}$ to $10^{-5}$ mbar after introduction of oxygen.

The amount of oxygen to be introduced and the like vary depending on, for example, the size of the vapor deposition machine. As a carrier gas for the oxygen to be introduced, inert gas such as argon, helium or nitrogen gas may be used within a range that does not hinder. The film transport speed is preferably about 10 to 800 m/min, particularly about 50 to 600 m/min.

In the present invention, the surface of the vapor-deposited film formed as described above may be treated with oxygen plasma.

The amount of oxygen to be introduced for the oxygen plasma treatment varies depending on, for example, the size of the vapor deposition machine, and is usually about 50 sccm to 2000 sccm, particularly preferably about 300 sccm to 800 sccm. Here, sccm means the average amount (cc) of oxygen introduced per minute at the standard temperature and pressure (STP: 0°C, 1 atm). As a carrier gas for the oxygen to be introduced, inert gas such as argon, helium or nitrogen gas may be used within a range that does not hinder. Such treatment on the vapor-deposited film (barrier film) improves the adhesion when the polyethylene film 1 is laminated to the barrier film 3 formed on the polyethylene film 2.

These are only examples, and the present invention is not limited to those obtained by these methods.

In order to produce a polyethylene-laminated film comprising the barrier film 3, the barrier film 3 is formed on the side of face 20 not irradiated with an electron beam of the polyethylene film 1 as described above, and then a melted polyethylene resin is extrusion-coated on the barrier film, so that a laminated film can be produced simultaneously with film-formation of the polyethylene film 2.

Laminate

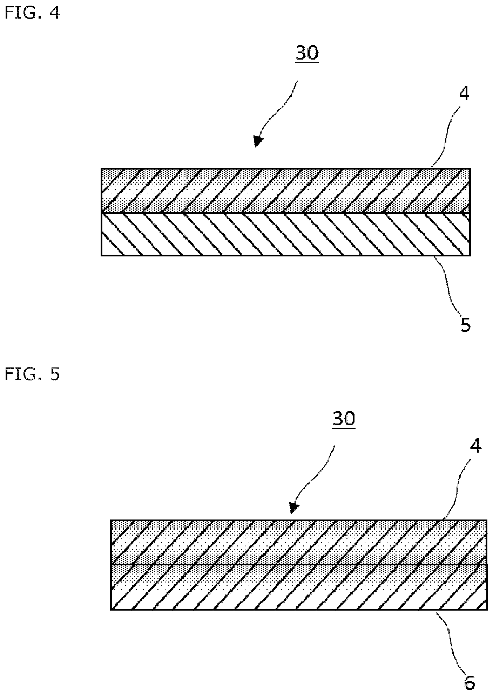

The laminate according to the present invention will be described with reference to the drawings. FIG. 4 is a schematic cross-sectional view of the laminate 30 according to the present invention.

The laminate 30 comprises a polyethylene film substrate 4 irradiated with an electron beam on its both sides and a polyethylene film layer 5 not irradiated with an electron beam on its both sides.

In one embodiment, as shown in FIG. 5, the laminate 30 comprises a polyethylene film substrate 4 irradiated with an electron beam on its both sides and a polyethylene film layer 6 not irradiated with an electron beam on its one side. The laminate is preferably produced such that the surface of the polyethylene film layer not irradiated with an electron beam is arranged on the outermost surface. The surface of the polyethylene film layer not irradiated with an electron beam arranged on the outermost surface can maintain the heat sealability of the laminate.

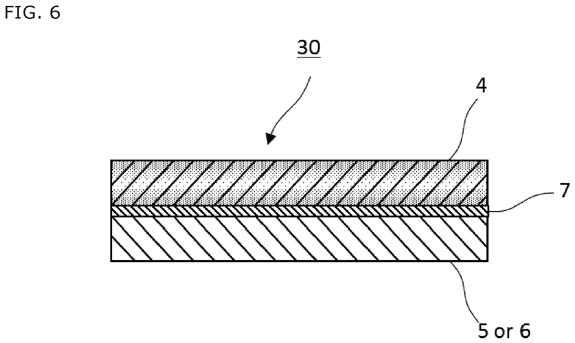

In one embodiment, as shown in FIG. 6, the laminate may also comprise a barrier film 7 between the polyethylene film substrate 4 irradiated with an electron beam on its both sides and the polyethylene film layer 5 or 6.

Polyethylene Film Substrate

The polyethylene film substrate provided on the laminate according to the present invention comprises a polyethylene film and is irradiated with an electron beam on its both sides.

The polyethylene film substrate may have a single layer or multilayer structure.

The laminate comprises such a polyethylene film substrate, so that the surface of the laminate can have improved heat resistance and strength, satisfying the physical properties required as the outer layer of a package or the like.

As materials constituting the polyethylene film layer, the same materials as those used for the above-mentioned polyethylene film can be used.

The polyethylene film substrate can be obtained by melting the above-mentioned polyethylene resin and allowing it to form a film by a melt extrusion molding method such as inflation molding or T-die molding.

The polyethylene film substrate having a multilayer structure can also be produced by laminating two polyethylene film substrates by a dry lamination method using an adhesive or the like and then irradiating it with an electron beam. In order to omit the steps of adhesive application and lamination, it can be produced by coextrusion from an inflation film molding machine or the like followed by electron beam irradiation. It can also be produced by an extrusion coating method.

The polyethylene film substrate provided on the laminate according to the present invention is irradiated with an electron beam on its both sides.

The electron beam irradiation may be applied on each of the sides, or on one side in which the electron beam penetrates the polyethylene film substrate and improves the crosslink density on the side opposite to the irradiated side.

It is preferred that the irradiation energy of the electron beam is changed as appropriate depending on the use of the intended package.

The dose of the electron beam irradiated on the polyethylene film substrate is preferably in the range of 10 to 2,000 kGy, more preferably 10 to 1,000 kGy, and still more preferably 50 to 1,000 kGy.

The acceleration voltage of the electron beam, when the electron beam is irradiated on one side, is preferably in the range of 20 to 750 kV, more preferably 25 to 400 keV, particularly preferably 50 to 400 kV.

The acceleration voltage of the electron beam, when the electron beam is irradiated on both sides, is preferably in the range of 20 to 750 kV, more preferably 25 to 400 kV, particularly preferably 30 to 300 kV, or may be in the range of 20 to 200 kV.

As the electron beam irradiation device, those described above can be used.

The oxygen concentration in the electron beam irradiation device is preferably 500 ppm or less, more preferably 100 ppm or less.

The thickness of the polyethylene film substrate may be optionally selected depending on its use, and is usually about 15 μm to 150 μm, preferably about 20 μm to 130 μm, more preferably about 20 μm to 100 μm. The film thickness of the polyethylene film substrate can be appropriately adjusted by changing, for example, the screw rotation speed of the melt extruder and the rotation speed of the cooling roll in the production of the above-mentioned polyethylene film.

Polyethylene Film Layer

The polyethylene film layer provided on the laminate according to the present invention comprises a polyethylene film, wherein its at least one side is not irradiated with an electron beam.

The laminate comprises such a layer, so that the laminate can comprise a substrate and a layer provided on the substrate each having different physical properties (e.g., strength and heat resistance) while using the same material (polyethylene).

As materials constituting the polyethylene film layer, the same materials as those used for the above-mentioned polyethylene film can be used. Therefore, since the same polyethylene is used, recycling can be easily performed.

The thickness of the polyethylene film layer may be optionally selected depending on its use, and is usually about 15 $\mu$m to 100 $\mu$m, preferably about 20 $\mu$m to 200 $\mu$m, more preferably about 25 $\mu$m to 160 $\mu$m.

Although the above-mentioned polyethylene film substrate and polyethylene film layer can also be produced by lamination via a dry lamination method using an adhesive or the like, extrusion coating of a melted polyethylene resin on the polyethylene film substrate, in order to omit the steps of adhesive application and lamination, can provide a laminate simultaneously with film-formation of the polyethylene film layer.

In the present invention, a laminate comprising the polyethylene film substrate and the polyethylene film layer may be produced by coextrusion, and then irradiated with an electron beam on its only one side.

When the polyethylene film layer is one irradiated with an electron beam on its one side, the polyethylene film layer is preferably laminated with the polyethylene film substrate such that the surface of the polyethylene film layer not irradiated with an electron beam is arranged on the outermost surface.

Barrier Film

The laminate of the present invention may optionally comprise a barrier film between the polyethylene film substrate and the polyethylene film layer. The barrier film is as described above.

Package

The package according to the present invention comprises the above-mentioned polyethylene film or laminate, wherein the side not irradiated with an electron beam of the polyethylene film or the side having the heat sealability of the polyethylene film layer provided in the laminate faces inward.

In one embodiment, such a packaging material can be produced by folding in half and superposing the polyethylene film so that the side not irradiated with an electron beam faces inward and heat-sealing the edges. Further, in a package according to another embodiment of the present invention, the polyethylene-laminated film described above may be used. For example, the package can be produced by folding in half and superposing the polyethylene-laminated film so that the side of the polyethylene film 2 not irradiated with an electron beam on its both sides faces inward and heat-sealing the edges.

Various types of packages can be produced by sealing methods, for example, a side sealing type, a two-side sealing type, a three-side sealing type, a four-side sealing type, an envelope sealing type, a butt-seam sealing type (pillow sealing type), a gusset sealing type, a flat-bottom sealing type, a square-bottom sealing type, a gusset type, or other heat-sealing types. Others, for example, self-standing packaging bag (standing pouch) are also possible. The methods for heat sealing include known methods such as bar sealing, rotary sealing, belt sealing, impulse sealing, high-frequency sealing, or ultrasonic sealing.

According to the present invention, even a film consisting of one material (or polyethylene) can be suitably used as a packaging film, since the polyethylene film on the side irradiated with an electron beam can satisfy the physical properties such as strength and dimensional stability required as the outer film of a package while the polyethylene film on the side not irradiated with an electron beam can maintain heat sealability. In addition, since the package is produced using a film consisting of one material, recycling of the material can be easily performed after use of the package.

EXAM PLES

The present invention will be described in detail below with reference to Examples, but the present invention is not limited to the Examples.

Preparation of Polyethylene Films 1A to 1D

A linear low-density polyethylene (EVOLUE SP2020, produced by Primepolymer Co.) was used to obtain an unstretched polyethylene film 1A having a thickness of 120 $\mu$m using an inflation film molding machine.

An unstretched polyethylene film 1B was obtained in the same manner as described above except that the film molding conditions were changed and the thickness was changed to 80 $\mu$m.

Further, unstretched polyethylene films 1C and 1D having a thickness of 120 $\mu$m and 80 $\mu$m, respectively, were obtained in the same manner as described above except that a low density polyethylene (LD2420H, produced by PTT Chemical Co.) was used.

Example 1-1

The one side of the prepared polyethylene film 1A was irradiated with an electron beam using an electron beam irradiation device (line-irradiation type low-energy electron beam irradiation device EES-L-DP01, produced by Hamamatsu Photonics Co., Ltd.) under the following conditions to obtain a polyethylene film 1-1 irradiated with an electron beam only on one side thereof.

Voltage: 70 kV
Current: 1 mA
Exposure dose: 650 kGy
Oxygen concentration in device: 100 ppm or less

Example 1-2

A polyethylene film 1-2 was obtained in the same manner as in Example 1-1, except that the exposure dose of the electron beam was change to 430 kGy in Example 1-1.

Example 1-3

A polyethylene film 1-3 was obtained in the same manner as in Example 1-2, except that an unstretched polyethylene film 1B was used as the polyethylene film in Example 1-2.

Example 1-4

A polyethylene film 1-4 was obtained in the same manner as in Example 1-1, except that an unstretched polyethylene film 1C was used as the polyethylene film in Example 1-1.

Example 1-5

A polyethylene film 1-5 was obtained in the same manner as in Example 1-4, except that the exposure dose of the electron beam was change to 430 kGy in Example 1-4.

Example 1-6

A polyethylene film 1-6 was obtained in the same manner as in Example 1-5, except that an unstretched polyethylene film 1D was used as the polyethylene film in Example 1-5.

Comparative Example 1-1

The unstretched polyethylene film A before irradiation with an electron beam in Example 1-1 was taken as a polyethylene film 1-7.

Evaluation of Heat Sealability

Each of the polyethylene films obtained in Examples 1-1 to 1-6 and Comparative Example 1-1 was cut to 10 cm x 10 cm to prepare a sample piece. The sample piece was folded in half so that the side not irradiated with an electron beam was inside, and a 1 cm x 10 cm area of this sample piece was heat-sealed using a heat-sealing tester at a temperature of 180°C and a pressure of 1 kgf/cm$^2$ for 1 second. Since both sides of the polyethylene film 7 from Comparative Example 1 was not irradiated with an electron beam, the film was folded in half without distinction between front and back and heat-sealed.

The obtained heat-sealed sample piece was visually evaluated for appearance. Evaluation criteria were as follows:

○: the surface is not molten and thus the sample piece has no problem in appearance
×: the surface is molten and thus the sample piece has a problem in appearance.

The evaluation results are shown in Table 1 below.
The heat-sealed sample piece was cut in rectangles with a width of 1.5 cm, and both edges not heat-sealed

were grasped by a tensile tester, and the peel strength (N/15 mm) was measured under the conditions where the rate was 300 mm/min and the load range were 50 N. The measurement results are shown in Table 1 below.

Table 1

|  | Evaluation of Appearance | Peel Strength (N/15 mm) |
|---|---|---|
| Example 1-1 | ○ | 24 |
| Example 1-2 | ○ | 22 |
| Example 1-3 | ○ | 15 |
| Example 1-4 | ○ | 19 |
| Example 1-5 | ○ | 18 |
| Example 1-6 | ○ | 13 |
| Comparative Example 1-1 | × | Unmeasurable due to film melting |

Preparation of Polyethylene Films 2A to 2D for Polyethylene Film Substrate

A linear low-density polyethylene (EVOLUE SP2020, produced by Primepolymer Co.) was used to obtain an unstretched polyethylene film 2A having a thickness of 25 $\mu$m using an inflation film molding machine.
An unstretched polyethylene film 2B was obtained in the same manner as described above except that the film molding conditions were changed and the thickness was changed to 50 $\mu$m.
Further, unstretched polyethylene films 2C and 2D having a thickness of 25 $\mu$m and 50 $\mu$m, respectively, were obtained in the same manner as described above except that a low density polyethylene (LD2420H, produced by PTT Chemical Co.) was used.

Preparation of Polyethylene Film Substrates 2-1 to 2-5

The both sides of the obtained polyethylene film 2A was irradiated with an electron beam using an electron beam irradiation device (LB1023, produced by Eye Electron Beam Co., Ltd.) under the following conditions to obtain a polyethylene film substrate 2-1 irradiated with an electron beam on its both sides.

Voltage: 300 kV
Current: 4 mA
Exposure dose: 750 kGy
Oxygen concentration in device: 100 ppm or less

A polyethylene film substrate 2-2 was obtained in the same manner as in preparation of the polyethylene film substrate 2-1, except that the exposure dose was changed to 500 kGy. Polyethylene film substrates 2-3, 2-4 and 2-5 were obtained in the same manner as in preparation of the polyethylene film substrate 2-1, except that the polyethylene film 2A was substituted with polyethylene films 2B, 2C and 2D, respectively.

Example 2-1

A linear low-density polyethylene (EVOLUE SP2020, Primepolymer) was extrusion-coated on the obtained polyethylene film substrate 2-1 to form a polyethylene film layer having a thickness of 60 $\mu$m, thereby obtaining a laminate 2-1.

Example 2-2

A laminate 2-2 was obtained in the same manner as in Example 2-1, except that the thickness of the polyethylene film layer was changed to 100 $\mu$m in Example 2-1.

Example 2-3

A laminate 2-3 was obtained in the same manner as in Example 2-1, except that the substrate was substituted with the polyethylene film substrate 2-2 in Example 2-1.

Example 2-4

A laminate 2-4 was obtained in the same manner as in Example 2-1, except that the substrate was substituted with the polyethylene film substrate 2-3 and the thickness of the polyethylene film layer was changed to 100 $\mu$m in Example 2-1.

Example 2-5

A laminate 2-5 was obtained in the same manner as in Example 2-1, except that the substrate was substituted with the polyethylene film substrate 2-4 in Example 2-1.

Example 2-6

A laminate 2-6 was obtained in the same manner as in Example 2-1, except that the substrate was substituted with the polyethylene film substrate 2-5 in Example 2-1.

Comparative Example 2-1

A laminate 2-7 was obtained in the same manner as in Example 2-1, except that an unstretched polyethylene film A before irradiation with an electron beam was used as a polyethylene film substrate in Example 2-1.

Evaluation of Heat Sealability

Each of the laminates obtained in the Examples 2-1 to 2-6 and the Comparative Example 2-1 was cut to 10 cm x 10 cm to prepare a sample piece. The sample piece was folded in half so that the side of polyethylene film layer was inside, and a 1 cm x 10 cm area of this sample piece was heat-sealed using a heat-sealing tester at a temperature of 180°C and a pressure of 1 kgf/cm$^2$ for 1 second.
The obtained heat-sealed sample piece was visually evaluated for appearance. Evaluation criteria were as follows:

○: the surface is not molten and thus the sample piece has no problem in appearance
×: the surface is molten and thus the sample piece has a problem in appearance.

The evaluation results were as shown in Table 2 below.
The heat-sealed sample piece was cut in rectangles with a width of 1.5 cm, and both edges not heat-sealed were grasped by a tensile tester, and the peel strength (N/15 mm) was measured under the conditions where the rate was 300 mm/min and the load range were 50 N. The measurement results are shown in Table 2 below.

Table 2

|  | Evaluation of Appearance | Peel Strength (N/15 mm) |
|---|---|---|
| Example 2-1 | ○ | 20 |
| Example 2-2 | ○ | 25 |
| Example 2-3 | ○ | 19 |
| Example 2-4 | ○ | 27 |
| Example 2-5 | ○ | 17 |
| Example 2-6 | ○ | 27 |
| Comparative Example 2-1 | × | Unmeasurable due to film melting |

**Claims**

1. A polyethylene film, which is irradiated with an electron beam on its only one side, wherein crosslink densities in the polyethylene are different between the side irradiated with an electron beam and the other side not irradiated with an electron beam.

2. The polyethylene film according to claim 1, wherein the dose of said electron beam is in the range of 20-1,000 kGy.

3. The polyethylene film according to claim 1 or 2, wherein the acceleration voltage of said electron beam is in the range of 30-300 kV.

4. A polyethylene-laminated film comprising the first polyethylene film according to any one of claims 1 to 3, and a second polyethylene film not irradiated with an electron beam on its both sides laminated on said side not irradiated with an electron beam of said first polyethylene film.

5. The polyethylene-laminated film according to claim 4, wherein a barrier film is provided between said polyethylene film irradiated with an electron beam on its only one side and the polyethylene film irradiated with an electron beam on its both sides.

6. A package comprising the polyethylene film according to any one of claims 1 to 3, wherein said side not irradiated with an electron beam of said polyethylene film is heat-sealed.

7. A package comprising the polyethylene-laminated film according to claim 4 or 5, wherein the polyethylene film side not irradiated with an electron beam on its both sides of said polyethylene-laminated film is heat-sealed.

8. A laminate comprising a polyethylene film substrate irradiated with an electron beam on its both sides and a polyethylene film layer not irradiated with an electron beam on its at least one side.

9. The laminate according to claim 8, wherein the dose of said electron beam is in the range of 10-1,000 kGy.

10. The laminate according to claim 8 or 9, wherein the acceleration voltage of said electron beam is in the range of 25-400 kV.

11. The laminate according to any one of claims 8 to 10, wherein a barrier film is provided between said polyethylene film substrate and said polyethylene film layer.

12. A package comprising the laminate according to any one of claims 8 to 11, wherein the side of said polyethylene film in said laminate is heat-sealed.

FIG. 1

FIG. 2

FIG. 3

FIG. 4

FIG. 5

FIG. 6

<u>30</u>

4

7

5 or 6

## INTERNATIONAL SEARCH REPORT

| International application No. |
| --- |
| PCT/JP2016/082123 |

**A. CLASSIFICATION OF SUBJECT MATTER**
*C08J7/00*(2006.01)i, *B32B27/00*(2006.01)i, *B32B27/16*(2006.01)i, *B32B27/32* (2006.01)i, *B65D65/38*(2006.01)i

According to International Patent Classification (IPC) or to both national classification and IPC

**B. FIELDS SEARCHED**

Minimum documentation searched (classification system followed by classification symbols)
B29C71/04, C08J7/00-7/02, C08J7/12-7/18, B32B1/00-43/00, B65D65/00-65/46

Documentation searched other than minimum documentation to the extent that such documents are included in the fields searched
Jitsuyo Shinan Koho           1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 07-266513 A  (Asahi Chemical Industry Co., Ltd.), 17 October 1995 (17.10.1995), claim 1; paragraphs [0001], [0056], [0077]; examples (Family: none) | 1-12 |
| X | JP 04-043032 A  (Asahi Chemical Industry Co., Ltd.), 13 February 1992 (13.02.1992), claim 1; page 6, upper left column, line 19 to upper right column, line 17; page 9, upper left column, line 16 to upper right column, line 19; page 9, lower left column, lines 2 to 6; examples (Family: none) | 1-12 |

☒  Further documents are listed in the continuation of Box C.          ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 January 2017 (16.01.17) | 24 January 2017 (24.01.17) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**INTERNATIONAL SEARCH REPORT**

International application No.

PCT/JP2016/082123

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2011-074261 A  (Asahi Kasei E-materials Corp.), 14 April 2011 (14.04.2011), claims 1, 4, 6; paragraphs [0017], [0018], [0022], [0035] to [0042], [0058] to [0081], [0097] to [0099]; examples (Family: none) | 1-12 |
| X | JP 2011-073337 A  (Asahi Kasei E-materials Corp.), 14 April 2011 (14.04.2011), claims 1, 4; paragraphs [0018], [0043] to [0050], [0100] to [0102]; examples (Family: none) | 1-12 |
| X A | JP 06-278774 A  (Toyo Seikan Kaisha, Ltd.), 04 October 1994 (04.10.1994), claims 1, 5, 6; paragraph [0015]; examples (Family: none) | 8-12 1-7 |
| X A | JP 56-005834 A  (Bayer AG.), 21 January 1981 (21.01.1981), claims 1 to 3, 6, 8; page 3, upper right column, line 8 to lower left column, line 6 & CA 1141700 A claims 1 to 3, 6, 8; page 4, lines 8 to 21 & EP 0022184 A1          & DE 2925205 A & AU 5913680 A | 1-7 8-12 |
| X A | JP 2005-225118 A  (Fuji Seal International, Inc.), 25 August 2005 (25.08.2005), claim 1; paragraphs [0006], [0012], [0013], [0019], [0037]; examples (Family: none) | 1-7 8-12 |
| X A | JP 2004-218101 A  (Toyo Ink Manufacturing Co., Ltd.), 05 August 2004 (05.08.2004), claims 1, 3; paragraphs [0001], [0010], [0017], [0019]; examples (Family: none) | 1-3 4-12 |

Form PCT/ISA/210 (continuation of second sheet) (January 2015)

## INTERNATIONAL SEARCH REPORT

| International application No. |
| --- |
| PCT/JP2016/082123 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
        See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**          ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

International application No.

PCT/JP2016/082123

Continuation of Box No.III of continuation of first sheet(2)

(Invention 1) claims 1-7
Claims 1-7 have a special technical feature that is a polyethylene film wherein: only one surface is irradiated with an electron beam; and the surface irradiated with an electron beam and the other surface not irradiated with an electron beam are different from each other in the crosslink density of the polyethylene. Consequently, claims 1-7 are placed in Invention 1.
(Invention 2) claims 8-12
Claims 8-12 are not dependent on claim 1.
Further, claims 8-12 have no relationship such that these claims are substantially same as or equivalent to any claim classified into Invention 1.
Consequently, claims 8-12 cannot be classified into Invention 1.
Since claims 8-12 have special technical features that are a polyethylene film base wherein both surfaces are irradiated with an electron beam and a polyethylene film layer wherein at least one surface is not irradiated with an electron beam, claims 8-12 are placed in Invention 2.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005104525 A

- JP 2013177531 A